# EUROPÄISCHE PATENTSCHRIFT

(11) **EP 3 991 530 B1**
(45) Veröffentlichungstag und Bekanntmachung des Hinweises auf die Patenterteilung: **06.09.2023**
(21) Anmeldenummer: 21203488.8
(22) Anmeldetag: 19.10.2021
(51) Int. Cl.: A01B 59/041, A01B 59/06

(54) **LANDWIRTSCHAFTLICHES NUTZFAHRZEUG MIT EINEM SEITENSTABILISATOR**
AGRICULTURAL COMMERCIAL VEHICLE WITH A SIDE STABILIZER
VÉHICULE UTILITAIRE AGRICOLE DOTÉ D'UN STABILISATEUR LATÉRAL

(30) Priorität: 28.10.2020 DE 102020128322; 08.12.2020 DE 102020132665
(43) Veröffentlichungstag der Anmeldung: 04.05.2022
(73) Patentinhaber: Deere & Company, Moline, IL 61265 (US)
(72) Erfinder: PATINO, MARIO, 68163 Mannheim (DE); HEITLINGER, MARTIN, 68163 Mannheim (DE); Stadlmayr, Ulrike, 68163 Mannheim (DE); Manoorkar, Anand, 68163 Mannheim (DE)
(74) Vertreter: Dehnhardt, Florian Christopher

(56) Entgegenhaltungen:
- EP-A1- 1 745 685
- EP-A1- 2 870 845
- EP-A1- 3 935 930
- DE-A1-102015 009 889

## Beschreibung

Die Erfindung betrifft ein landwirtschaftliches Nutzfahrzeug mit einer Lagerkonsole zur beweglichen Lagerung eines Seitenstabilisators, welcher in Betriebseinbaulage eine mechanische Kopplung der Lagerkonsole mit einem Heck-Kraftheber des Nutzfahrzeugs bewirkt, wobei die Lagerkonsole sich zumindest teilweise entlang einer Fahrzeug-Längsrichtung erstreckt, mit dem Achsgehäuse in einem gegenseitigen Befestigungsbereich fest verbunden ist, und von dem Befestigungsbereich in Fahrzeug-Längsrichtung beabstandet mit Verbindungsmitteln verbunden ist.

Derartige Lagerkonsolen sind vorzugsweise an einem Achsgehäuse für eine Hinterachse des landwirtschaftlichen Nutzfahrzeugs befestigt. Die mechanische Verbindung zwischen dem Achsgehäuse und der Lagerkonsole wird oftmals mittels geeigneter Spannelemente realisiert.

Hierbei geht aus der EP 1 745 685 A1 eine Vorrichtung zur seitlichen Stabilisierung der Hubarme an einem Dreipunkt-Kraftheber eines landwirtschaftlichen Traktors hervor. Die Vorrichtung umfasst einen Bügel, der sich an einer Unterseite eines Achsgehäuses des landwirtschaftlichen Traktors befindet. An dem Bügel ist wiederum ein Schwenkarm mittels eines Schwenkbolzens angebracht. Unterhalb des Schwenkbolzens ist an dem Schwenkarm ein zylindrischer Bolzen vorgesehen, an dem eine mit dem Hubarm in Verbindung stehende Stützstrebe gelagert ist.

Der vorliegenden Erfindung liegt die Aufgabe zugrunde, die mechanischen Eigenschaften bei der Lagerung des Seitenstabilisators weiter zu verbessern.

Diese Aufgabe wird durch ein landwirtschaftliches Nutzfahrzeug mit den Merkmalen des Patentanspruchs 1 gelöst.

Weitere vorteilhafte Ausgestaltungen des erfindungsgemäßen Nutzfahrzeuges gehen aus den Unteransprüchen hervor.

Gemäß Patentanspruch 1 weist das landwirtschaftliche Nutzfahrzeug ein Achsgehäuse für eine Hinterachse und eine Lagerkonsole auf. Die Lagerkonsole dient zur beweglichen Lagerung eines Seitenstabilisators, welcher in Betriebseinbaulage eine mechanische Kopplung der Lagerkonsole mit einem Heck-Kraftheber bewirkt. Die Lagerkonsole ist mit dem Achsgehäuse in einem gegenseitigen Befestigungsbereich fest verbunden. Dabei können die Lagerkonsole und das Achsgehäuse beispielsweise mit einander zugewandten Anlageflächen entweder unmittelbar oder unter Zwischenlage mindestens eines geeigneten Zwischenelementes mittelbar miteinander fest verbunden sein, vorzugsweise durch geeignete Spannmittel (z.B. Spannbolzen oder Spannschrauben).

Die Lagerkonsole erstreckt sich zumindest teil- oder abschnittsweise entlang einer Fahrzeug-Längsrichtung. Ausgehend von dem Befestigungsbereich ist die Lagerkonsole in Fahrzeug-Längsrichtung beabstandet zusätzlich mit Verbindungsmitteln mechanisch verbunden. Diese Verbindungsmittel bewirken mindestens eine zusätzliche mechanische Verbindung der Lagerkonsole mit dem Nutzfahrzeug. Als Verbindungsmittel sind zumindest vorgesehen:
- Hoch-Verbindungsmittel, welche sich zumindest teilweise entlang einer Fahrzeug-Hochrichtung erstrecken zur Verbindung der Lagerkonsole mit einer Verbindungsstelle an dem Achsgehäuse, und/oder
- Quer-Verbindungsmittel, welche sich zumindest teilweise entlang einer Fahrzeug-Querrichtung erstrecken zur Verbindung der Lagerkonsole mit einem Verbindungslager, welches mit einer Tragstruktur (z.B. Chassis, Rahmen) des Nutzfahrzeugs fest verbunden ist.

Soweit sich die vorgenannten Verbindungsmittel entlang der Fahrzeug-Hochrichtung bzw. der Fahrzeug-Querrichtung erstrecken, müssen sie nicht exakt parallel zur Fahrzeug-Hochrichtung bzw. Fahrzeug-Querrichtung ausgerichtet sein. Ihre geometrische Ausrichtung ist vorzugsweise an die spezifischen Einbaubedingungen im Bereich des Achsgehäuses und der Tragstruktur angepasst.

Die Verbindungsmittel bewirken zumindest in die jeweils genannte Fahrzeugrichtung, d.h. in Fahrzeug-Hochrichtung oder in Fahrzeug-Querrichtung, ein effizientes Abfangen bzw. Übertragen einer Kraftkomponente von (Zug-)Kräften, welche im Betrieb bzw. Arbeitseinsatz des Nutzfahrzeugs durch den Seitenstabilisator generiert werden.

Mit den vorgenannten Merkmalen der geometrischen Ausrichtung der Lagerkonsole und der Verbindungsmittel können die von dem Seitenstabilisator in Betriebseinbaulage an der Lagerkonsole angreifenden Kräfte als Kraftkomponenten in unterschiedliche Raumrichtungen (x = Längsrichtung, y = Querrichtung, z = Hochrichtung bezüglich eines am Nutzfahrzeug definierten Koordinatensystems) separat übertragen und abgefangen werden. Mit anderen Worten können entlang der Lagerkonsole selbst und entlang der verwendeten Verbindungsmittel die vom Seitenstabilisator im Betrieb erzeugten Kräfte als Kraftkomponenten aufgeteilt übertragen werden. Hierdurch wird die mechanische Belastung der Lagerkonsole durch angreifende (Zug-)Kräfte bzw. Momente des Seitenstabilisators signifikant reduziert. Dies unterstützt eine kostengünstige, raumsparende und leichtgewichtige Dimensionierung der Lagerkonsole und der Verbindungsmittel (z.B. Spannelemente) im Befestigungsbereich, um dennoch eine ausreichend stabile mechanische Tragfähigkeit der Lagerkonsole bezüglich des Seitenstabilisators zu erzielen.

Ebenso können auch ggf. eingesetzte mechanische Verbindungsmittel (z.B. Spannbolzen, Spannschrauben) zwischen dem Achsgehäuse und der Lagerkonsole sowie dem Verbindungslager und der Lagerkonsole kleiner und folglich vergleichsweise kostengünstig sowie raumsparend dimensioniert werden.

Die mechanische Unterstützung der Lagerkonsole durch die Hoch-Verbindungsmittel und/oder die Quer-Verbindungsmittel schafft die Voraussetzung für ein besonders effizientes Verhältnis zwischen (Zug-)Kräften des Seitenstabilisators und Verbindungskräften, welche eine mechanische Verbindung zwischen der Lagerkonsole und dem Achsgehäuse und ggf. auch zwischen der Lagerkonsole und der Tragstruktur des Nutzfahrzeugs bewirken. Die notwendigen Verbindungskräfte (z.B. Spannkräfte mittels geeigneter Spannmittel) können signifikant reduziert werden. Zudem werden unerwünschte Reibungskräfte zwischen dem Achsgehäuse und der Lagerkonsole reduziert, welche im Betrieb des Seitenstabilisators induziert werden können.

Die verhältnismäßig kleine Dimensionierung der Lagerkonsole erlaubt eine größere Bodenfreiheit des Nutzfahrzeugs im Bereich seiner Hinterachse und eine besonders montagefreundliche Handhabung der Lagerkonsole bei dem Zusammenbau des Nutzfahrzeugs.

Vorzugsweise ist die Lagerkonsole im Einbauzustand sowohl über Hoch-Verbindungsmittel mit dem Achsgehäuse mechanisch verbunden als auch über Quer-Verbindungsmittel mit der Tragstruktur des Nutzfahrzeugs mechanisch verbunden.

Die Verwendung der Hoch-Verbindungsmittel und/oder der Quer-Verbindungsmittel schließt in spezifischen Ausführungsformen nicht aus, dass auch noch andere Verbindungsmittel mit der Lagerkonsole zusammenwirken, um letztere bei der Übertragung angreifender Kräfte zu unterstützen.

Die bewegliche Lagerung des Seitenstabilisators an einer Lagerstelle der Lagerkonsole ist beispielsweise als eine drehbewegliche Lagerung um eine Drehachse ausgebildet. Diese Drehachse kann etwa horizontal und dabei in einem spitzen Winkel zu der Hinterachse des Nutzfahrzeugs verlaufen. Alternativ kann an der Lagerstelle ein Kugelgelenk vorgesehen sein, welches eine Beweglichkeit des Seitenstabilisators in mehrere Richtungen erlaubt, insbesondere auch eine laterale Bewegung etwa entlang einer Fahrzeug-Querrichtung, welche parallel zur Hinterachse verläuft.

Die Lagerkonsole kann aus unterschiedlichen Werkstoffen und unterschiedlichen Herstellungsverfahren gefertigt werden. Insbesondere ist sie aus einem metallischen Werkstoff oder einer metallischen Legierung als ein Schmiedeteil, Schweißteil oder Gussteil gefertigt.

Die Kombination der Lagerkonsole mit den verwendeten Verbindungsmitteln und ggf. weiteren zugehörigen Montageteilen (z.B. Spannmittel, Hülsen) kann auch als eine Lageranordnung bezeichnet werden.

Das landwirtschaftliche Nutzfahrzeug ist vorzugsweise als ein Traktor bzw. Schlepper ausgebildet.

Vorzugsweise verlaufen die Hoch-Verbindungsmittel zumindest teilweise bzw. abschnittsweise parallel zu einer durch die Fahrzeug-Längsrichtung und die Fahrzeug-Querrichtung aufgespannten Ebene. Weiter vorzugsweise verlaufen die Quer-Verbindungsmittel zumindest teilweise bzw. abschnittsweise parallel zu einer Ebene, welche durch die Fahrzeug-Längsrichtung und die Fahrzeug-Querrichtung aufgespannt ist. Insbesondere verlaufen die Hoch-Verbindungsmittel zumindest teilweise bzw. abschnittsweise parallel zur Fahrzeug-Hochrichtung. Weiter insbesondere verlaufen die Quer-Verbindungsmittel zumindest teilweise bzw. abschnittsweise parallel zur Fahrzeug-Querrichtung. Die vorbeschriebenen Ausrichtungen der Verbindungsmittel unterstützen eine leichtgewichtige Konstruktion der Lagerkonsole selbst bei verhältnismäßig großen Kräften, welche von dem Seitenstabilisator generiert an der Lagerkonsole angreifen und dort stabil übertragen werden sollen.

Vorzugsweise sind die Hoch-Verbindungsmittel entlang der Fahrzeug-Längsrichtung zumindest teilweise bzw. abschnittsweise zwischen dem Befestigungsbereich und den Quer-Verbindungsmitteln angeordnet. Diese Anordnung bei Verwendung beider Verbindungsmittel unterstützt eine raumsparende Gestaltung der Lageranordnung unter Beibehaltung der gewünschten leichtgewichtigen Ausgestaltung der Lagerkonsole.

In einer bevorzugten Ausführungsform sind die Hoch-Verbindungsmittel und die Quer-Verbindungsmittel entlang der Fahrzeug-Längsrichtung an demselben Konsolenabschnitt der Lagerkonsole mit letzterer verbunden. Diese Relativanordnung fördert eine zeitsparende Montage der Lageranordnung mit einer geringen Anzahl an Bauteilen.

Einzelne Verbindungen der Lageranordnung mit dem Achsgehäuse und/oder über das Verbindungslager mit der Tragstruktur sind vorzugsweise kraftschlüssig (z.B. durch Aufbau von Spannkräften mittels Spannschrauben, Spannbolzen) und/oder formschlüssig und hierdurch mechanisch stabil realisiert.

Insbesondere ist die Lagerkonsole mit dem Achsgehäuse an dem Befestigungsbereich durch eine Spannkraft verbunden. Vorzugsweise ist die Lagerkonsole (zumindest mittelbar durch die Hoch-Verbindungsmittel) mit dem Achsgehäuse an dessen Verbindungsstelle durch eine Spannkraft verbunden. Weiter vorzugsweise ist die Lagerkonsole mit dem Verbindungslager (und somit auch mit der Tragstruktur) durch eine Spannkraft verbunden. Zur Realisierung der Spannkraft und somit einer kraftschlüssigen Verbindung wird für jede Verbindung mindestens ein geeignetes Spannelement (z.B. Spannschraube, Spannbolzen) verwendet.

Im Falle eines verwendeten Spannelements ist dieses vorzugsweise von einer Verbindungshülse umgeben, welche in eine Hülsenaufnahme des Achsgehäuses oder des Verbindungslagers formschlüssig eingreift. Diese formschlüssige Verbindung unterstützt ein Abfangen der vom Seitenstabilisator generierten Kräfte. Insbesondere kann die Verbindungshülse radiale Scherkräfte abfangen, so dass das jeweilige Spannelement entsprechend mechanisch entlastet ist und kleiner dimensioniert werden kann.

Für eine montagefreundliche und kostensparende Wartung und ggf. Reparatur der Lageranordnung sind einzelne mechanische Verbindungen innerhalb der Lageranordnung oder zwischen der Lageranordnung und dem Achsgehäuse oder zwischen der Lageranordnung und der Tragstruktur (über das Verbindungslager) vorzugsweise lösbar ausgebildet. Dabei handelt es sich beispielsweise um lösbare Spannelemente, wie etwa lösbare Spannschrauben oder Spannbolzen. Insbesondere ist mindestens eine der folgenden mechanischen Verbindungen lösbar ausgebildet:
- eine Verbindung zwischen der Lagerkonsole und dem Achsgehäuse an dem Befestigungsbereich,
- eine Verbindung zwischen der Lagerkonsole und dem Achsgehäuse an dessen Verbindungsstelle,
- eine Verbindung zwischen der Lagerkonsole und dem Verbindungslager bzw. der Tragstruktur,
- eine Verbindung zwischen den Hoch-Verbindungsmitteln und der Lagerkonsole,
- eine Verbindung zwischen den Quer-Verbindungsmitteln und der Lagerkonsole,
- eine Verbindung zwischen den Hoch-Verbindungsmitteln und den Quer-Verbindungsmitteln.

Die Verbindung der Lagerkonsole über das Verbindungslager mit der Tragstruktur des Nutzfahrzeugs kann als eine unmittelbare Verbindung mit der Tragstruktur oder als eine mittelbare Verbindung mit der Tragstruktur ausgebildet sein. Bei einer mechanisch stabilen und raumsparenden mittelbaren Verbindung ist das Verbindungslager vorzugsweise (einstückiger oder mehrstückiger) Bestandteil eines Differentialgehäuses, welches mit der Tragstruktur des Nutzfahrzeugs fest verbunden ist. Hierbei weist das Differentialgehäuse einen geeigneten Lagerbereich in Form des Verbindungslagers zur Befestigung der Quer-Verbindungsmittel auf. Da das Differentialgehäuse mit der Tragstruktur fest verbunden ist, ergibt sich automatisch auch eine feste Verbindung zwischen der Lagerkonsole und der Tragstruktur.

Der vorgenannte Lagerbereich des Differentialgehäuses kann bei einer entsprechenden Ausgestaltung auch eine Funktion zur Lagerung einzelner Bauteile des Heck-Krafthebers (z.B. eines Unterlenkers und/oder eines Hubzylinders) erfüllen.

In einer bevorzugten Ausführungsform weist das Achsgehäuse einen zumindest abschnittsweise kegelstumpfartig ausgebildeten Gehäusemantel auf. Das Achsgehäuse kann dann als ein Achstrichter bezeichnet werden. Dessen Kegelstumpfachse fällt im Einbauzustand vorzugsweise mit der Mittellängsachse der Hinterachse des Nutzfahrzeugs zusammen.

Das erfindungsgemäße Nutzfahrzeug wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht eines Traktors mit sichtbar dargestellten Bauteilen in einem Fahrzeugbereich gemäß Detail II,
- Fig. 2: eine perspektivische und vergrößerte Teildarstellung des Fahrzeugbereichs gemäß Detail II aus Fig. 1 mit einer Lageranordnung für einen Seitenstabilisator,
- Fig. 3: den Fahrzeugbereich gemäß Fig. 2 in einer anderen perspektivischen Darstellung, jedoch mit der Lageranordnung unter Weglassen des Seitenstabilisators,
- Fig. 4: die Lageranordnung in einer weiteren Ausführungsform,
- Fig. 5: die Lageranordnung gemäß Fig. 3 in einer teilweise geschnittenen Seitenansicht gemäß Blickrichtung V in Fig. 3, und
- Fig. 6: die Lageranordnung gemäß Fig. 3 in einer teilweise geschnittenen Seitenansicht gemäß Blickrichtung VI in Fig. 3.

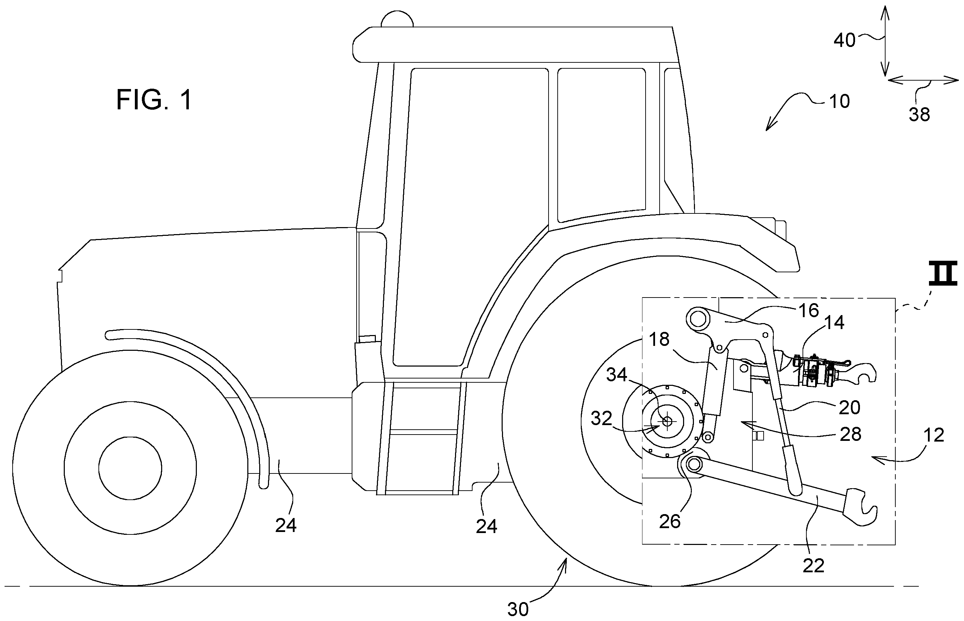

Fig. 1 zeigt ein landwirtschaftliches Nutzfahrzeug 10 in Form eines Traktors mit einem heckseitigen Dreipunkt-Kraftheber 12.

Der heckseitige Kraftheber 12 enthält übliche Bauteile wie einen hydraulischen Oberlenker 14, einen sich am Nutzfahrzeug 10 gelenkig abstützenden Hubarm 16, einen sich am Nutzfahrzeug 10 und am Hubarm 16 gelenkig abstützenden hydraulischen Hubzylinder 18 und eine längenverstellbare Hubstrebe 20, die sich am Hubarm 22 und an einem Unterlenker 22 gelenkig abstützt. Üblicherweise enthält der Kraftheber 12 zwei lotrecht zur Zeichenblattebene beabstandete Unterlenker 22, welche jeweils mit der vorbeschriebenen Hebelkonstruktion verbunden sind.

Der bzw. die Unterlenker 22 und der bzw. die Hubzylinder 18 sind jeweils an einem mit einer Tragstruktur 24 des Nutzfahrzeugs 10 fest verbundenen Lager beweglich gelagert. Vorzugsweise handelt es sich bei diesen Lagern um einen gemeinsamen Lagerbereich 26, welcher mit einem Differentialgehäuse 28 fest verbunden und insbesondere einstückiger Bestandteil des Differentialgehäuses 28 ist. Letzteres ist mit der Tragstruktur 24 fest und insbesondere wieder lösbar verbunden.

Die vorgenannten Bauteile im Bereich des Details II sind lediglich der besseren Information halber sichtbar dargestellt. Üblicherweise sind diese Bauteile durch den Hinterreifen 30 des Nutzfahrzeugs 10 überwiegend verdeckt.

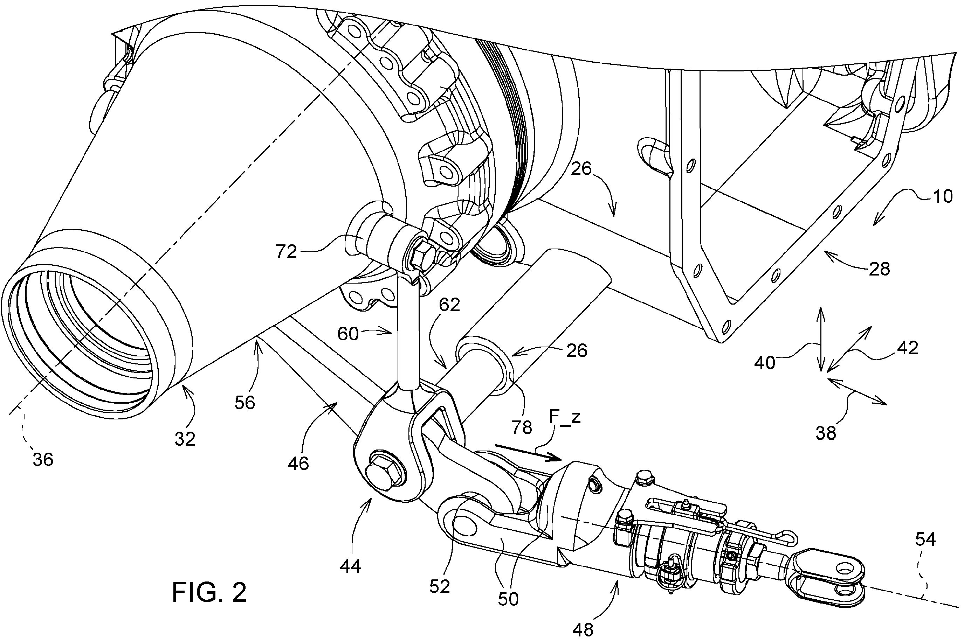

Von dem Hinterreifen 30 üblicherweise abgedeckt ist auch ein Achsgehäuse 32 für eine Hinterachse 34 des Nutzfahrzeugs 10. Das Achsgehäuse 32 umgibt etwa konzentrisch die Hinterachse 34 des Nutzfahrzeugs 10. Das auch als Achstrichter bezeichnete Achsgehäuse 32 weist einen kegelstumpfartig ausgebildeten Gehäusemantel auf. Dessen Kegelstumpfachse 36 fällt etwa mit einer Mittellängsachse der Hinterachse 34 zusammen (Fig. 2).

Das Nutzfahrzeug 10 bewegt sich entlang einer Fahrtrichtung, welche parallel zu einer Fahrzeug-Längsrichtung 38 verläuft. Lotrecht dazu verläuft eine Fahrzeug-Hochrichtung 40 des Nutzfahrzeugs 10. Quer zur Längsrichtung 38 und zur Hochrichtung 40 verläuft eine Fahrzeug-Querrichtung 42, welche parallel zur Hinterachse 34 ausgerichtet ist (Fig. 2).

In Fig. 2 ist erkennbar, dass eine Lageranordnung 44 mit einer Lagerkonsole 46 der beweglichen Lagerung eines Seitenstabilisators 48 dient. Mit seinem in Fig. 2 erkennbaren Freiende 50 ist der Seitenstabilisator 48 an einer Lagerstelle 52 der Lagerkonsole 46 beweglich angelenkt. Das dem Freiende 50 entlang der Stabilisator-Längsachse 54 gegenüberliegende und hier nicht erkennbare Freiende des Seitenstabilisators 48 ist beweglich an einem der beiden Unterlenker 22 angelenkt. Je nach Ausführungsform des Nutzfahrzeugs 10 und/oder des Heck-Krafthebers 12 trägt das Nutzahrzeug 10 entweder eine Lagerkonsole 46 für die mechanische Kopplung mit einem Unterlenker 22 oder an beiden Fahrzeugseiten jeweils eine Lagerkonsole 46 für eine mechanische Kopplung mit beiden Unterlenkern 22. Unabhängig von der jeweiligen Ausführungsform und Anzahl der Seitenstabilisatoren 48 bewirkt jeder Seitenstabilisator 48 eine mechanische Kopplung der Lagerkonsole(n) 46 mit dem Heck-Kraftheber 12. Der Seitenstabilisator 48 greift mit (Zug-)Kräften F_z an der Lagerkonsole 46 an. Diese Kräfte F_z werden von der Lageranordnung 44 abgefangen und übertragen.

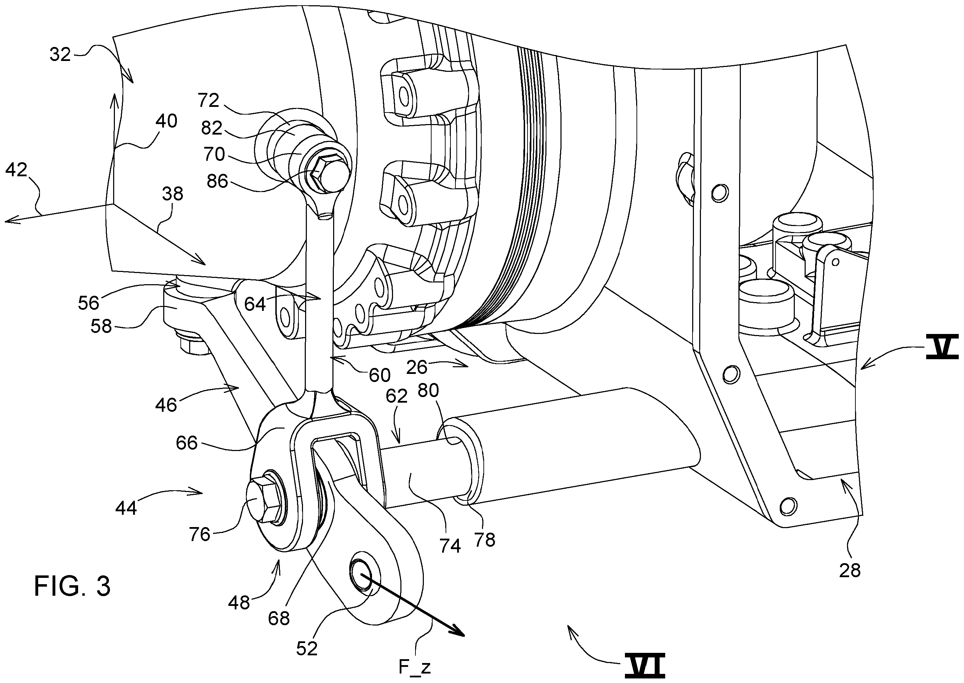

In Fig. 3 ist erkennbar, dass die Lagerkonsole 46 und das Achsgehäuse 32 in einem gegenseitigen Befestigungsbereich 56 miteinander fest verbunden sind. Hierbei ist ein Konsolenfreiende 58 auf noch zu erläuternde Weise mit dem Achsgehäuse 32 lösbar verspannt.

Weiterhin zeigt Fig. 3 die Lageranordnung 44 mit der Lagerkonsole 46, Hoch-Verbindungsmitteln 60 und Quer-Verbindungsmitteln 62.

Die Hoch-Verbindungsmittel 60 enthalten ein sich entlang der Fahrzeug-Hochrichtung 40 erstreckendes Hoch-Verbindungselement 64, welches mit einem im Querschnitt U-förmigen oder gabelförmigen Verbindungsende 66 an einem Konsolenabschnitt 68 der Lagerkonsole 46 lösbar verbunden ist. In Fahrzeug-Hochrichtung 40 gegenüberliegend weist das Hoch-Verbindungselement 64 ein ösenartiges Verbindungsende 70 auf. Über dieses Verbindungsende 70 ist das Hoch-Verbindungselement 64 und somit auch die Lagerkonsole 46 mit einer Verbindungsstelle 72 des Achsgehäuses 32 und folglich mit dem Achsgehäuse 32 selbst fest verbunden.

Das Hoch-Verbindungselement 64 verläuft etwa parallel zu einer durch die Fahrzeug-Längsrichtung 38 und die Fahrzeug-Hochrichtung 40 aufgespannten Ebene. Insbesondere ist das Hoch-Verbindungselement 64 parallel zur Fahrzeug-Hochrichtung 40 ausgerichtet oder entlang der Fahrzeug-Längsrichtung 38 in Richtung des Achsgehäuses 32 geneigt ausgerichtet.

Die Quer-Verbindungsmittel 62 in Fig. 3 weisen eine hohlzylindrische Verbindungshülse 74 und ein Spannelement 76 in Form einer Spannschraube auf. Beide Bauteile 74, 76 verlaufen im Wesentlichen parallel zur Fahrzeug-Querrichtung 42. Die Spannschraube 76 greift kraftschlüssig in ein Verbindungslager 78 ein, welches am Lagerbereich 26 vorgesehen ist. Die Verbindungshülse 74 greift formschlüssig in eine Hülsenaufnahme 80 des Verbindungslagers 78 ein. Das Verbindungslager 78 ist am Lagerbereich 26 vorgesehen.

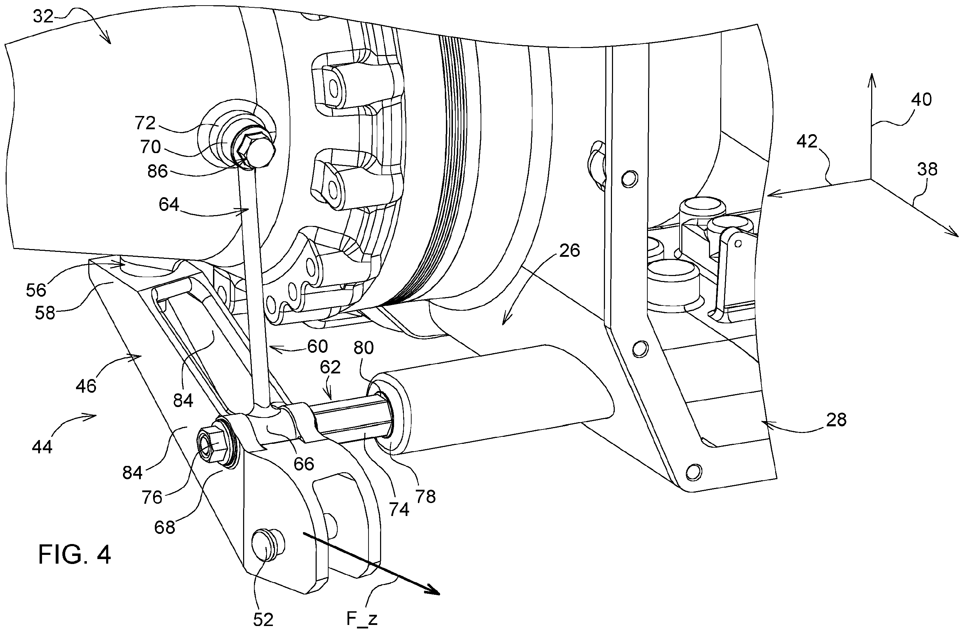

Die Hoch-Verbindungsmittel 60 sind in einer bevorzugten Ausführungsform entlang der Fahrzeug-Längsrichtung 38 zumindest teilweise - insbesondere im Bereich des ösenartigen Verbindungsendes 70 - zwischen dem Befestigungsbereich 56 und den Quer-Verbindungsmitteln 62 angeordnet. Diese Ausführung ist beispielsweise in Fig. 4 erkennbar. Bei dieser Ausführung entsteht durch den Verzicht eines Abstandselementes 82 in Form einer Abstandshülse (gemäß Fig. 3) eine Neigung bzw. größere Neigung des Hoch-Verbindungselementes 64 in Richtung des Achsgehäuses 32.

Die Hoch-Verbindungsmittel 60 und die Quer-Verbindungsmittel 62 sind entlang der Fahrzeug-Längsrichtung 38 betrachtet an demselben Konsolenabschnitt 68 der Lagerkonsole 46 mit letzterer verbunden.

Bei der Lageranordnung 44 gemäß Fig. 4 sind die Lagerkonsole 46, das Hoch-Verbindungselement 64 und die Verbindungshülse 74 im Vergleich zur Variante gemäß Fig. 3 konstruktionstechnisch teilweise anders ausgebildet. Die Lagerkonsole gemäß Fig. 4 ist zwischen dem Konsolenfreiende 58 und der Lagerstelle 52 mit zwei im Wesentlichen parallel angeordneten Seitenwangen 84 ausgestattet, welche im Wesentlichen mit Parallelabstand zueinander angeordnet sind.

Das Verbindungsende 66 ist in Fig. 4 etwa hohlzylindrisch ausgebildet und entlang der Querrichtung 42 von den Quer-Verbindungsmitteln 62 durchsetzt. Die Verbindungshülse 74 hat in Fig. 4 ein äußeres Sechskantprofil ähnlich einer Schraubenmutter und greift wiederum formschlüssig in die Hülsenaufnahme 80 ein.

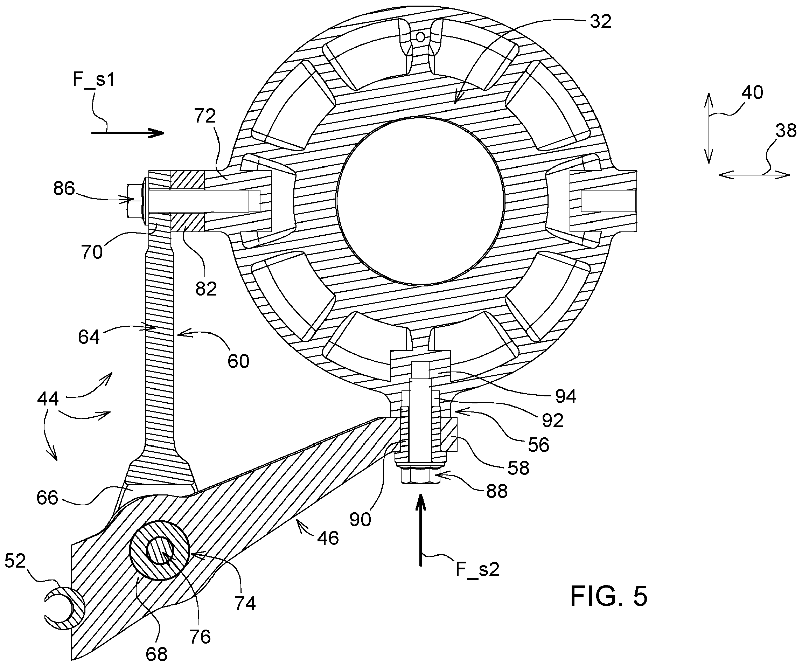

In Fig. 5 ist erkennbar, dass die Hoch-Verbindungsmittel 60 eine Spannschraube 86 enthalten, welche das Verbindungsende 70 und die Abstandshülse 82 durchsetzt und kraftschlüssig (über ein Schraubinnengewinde) in die Verbindungsstelle 72 des Achsgehäuses 32 eingreift. Hierdurch ist das Hoch-Verbindungselement 64 durch eine etwa in Fahrzeug-Längsrichtung 38 ausgerichtete Spannkraft F_s1 mit dem Achsgehäuse 32 verspannt.

Im Befestigungsbereich 56 durchsetzt eine weitere Spannschraube 88 das Konsolenfreiende 58 und eine darin einliegende Verbindungshülse 90, welche formschlüssig in eine Hülsenaufnahme 92 eines Verbindungsauslegers 94 des Achsgehäuses 32 eingreift. Die Spannschraube 88 greift kraftschlüssig (über ein Schraubinnengewinde) in den Verbindungsausleger 94 ein. Hierdurch ist die Lagerkonsole 46 durch eine etwa in Fahrzeug-Hochrichtung 40 ausgerichtete Spannkraft F_s2 mit dem Achsgehäuse 32 verspannt.

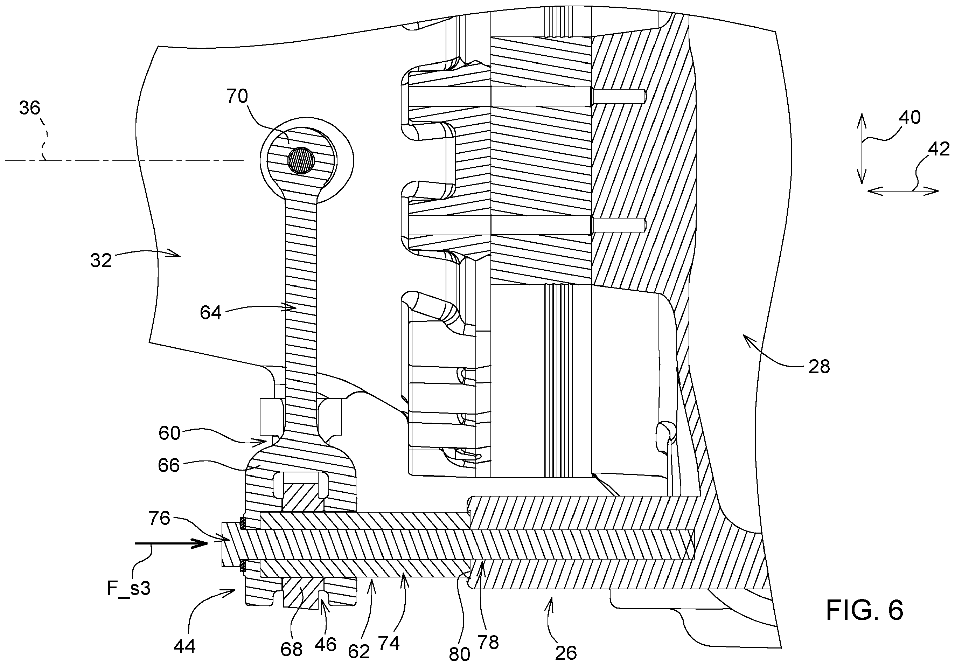

Fig. 6 zeigt die kraftschlüssige Verbindung zwischen der Lagerkonsole 46 und dem Verbindungslager 78 mittels des Spannelementes 76, welches als Spannschraube über ein Schraubinnengewinde in das Verbindungslager 78 eingreift. Hierdurch ist die Lagerkonsole 46 durch eine etwa in Fahrzeug-Querrichtung 42 ausgerichtete Spannkraft F_s3 mit dem Differentialgehäuse 28 und folglich mit der Tragstruktur 24 verspannt.

Die Spannelemente 76, 86, 88 können unterschiedlich oder identisch dimensioniert sein. Abhängig von der Größe der abzufangenden Kräfte kann eine verwendete Spannschraube von einer Verbindungshülse umgeben sein oder nicht. Die Verbindungshülsen 74, 90 selbst können identisch oder unterschiedlich dimensioniert sein. Die Verbindungshülsen können Schub- und Scherkräfte abfangen, welche radial zu den Spannkräften F_s1, F_s2, F_s3 ausgerichtet sind. Die verwendeten Spannelemente 76, 86, 88 werden entsprechend entlastet und können entsprechend kleiner dimensioniert werden.

Die verwendeten Spannschrauben 76, 86, 88 ermöglichen eine lösbare Verbindung zwischen der Lagerkonsole 46 und dem Verbindungslager 78, zwischen der Lagerkonsole 46 (über das Hoch-Verbindungselement 64) und dem Achsgehäuse 32 an dessen Verbindungsstelle 72 sowie zwischen der Lagerkonsole 46 und dem Achsgehäuse 32 an dem Befestigungsbereich 56. Sind vorgenannte Verbindungen gelöst, können auch die Hoch-Verbindungsmittel 60 bzw. das Hoch-Verbindungselement 64 sowie die Quer-Verbindungsmittel 62 von der Lagerkonsole 46 demontiert bzw. gelöst werden. Die Hoch-Verbindungsmittel 60 und die Quer-Verbindungsmittel 62 sind dann ebenfalls voneinander gelöst.

Die Lageranordnung 44 ist konstruktionstechnisch derart ausgebildet, dass von dem Seitenstabilisator 48 in Betriebseinbaulage an der Lagerkonsole 46 angreifende Kräfte F_z als Kraftkomponenten in unterschiedliche Raumrichtungen aufgeteilt und hierdurch separat übertragen bzw. abgefangen werden. Die überwiegend in Fahrzeug-Längsrichtung 38 ausgerichtete Lagerkonsole 46 kann eine x-Komponente der Kräfte F_z übertragen. Die überwiegend in Fahrzeug-Hochrichtung 40 ausgerichteten Hoch-Verbindungsmittel 60 können eine z-Komponente der Kräfte F_z übertragen. Die überwiegend in Fahrzeug-Querrichtung 42 ausgerichteten Quer-Verbindungsmittel 62 können eine y-Komponente der Kräfte F_z übertragen.

Mit anderen Worten können an der Lageranordnung 44 die vom Seitenstabilisator 48 im Betrieb erzeugten Kräfte F_z als Kraftkomponenten aufgeteilt übertragen werden. Hierdurch wird die mechanische Belastung der Lagerkonsole 46 durch angreifende (Zug-)Kräfte F_z des Seitenstabilisators 48 signifikant reduziert. Dies unterstützt eine kostengünstige, raumsparende und leichtgewichtige Dimensionierung der Lagerkonsole 46, um dennoch eine ausreichend stabile mechanische Tragfähigkeit der Lagerkonsole 46 bezüglich des Seitenstabilisators 48 zu erzielen.

## Patentansprüche

1. Landwirtschaftliches Nutzfahrzeug (10) mit einem Achsgehäuse (32) für eine Hinterachse (34) und mit einer Lagerkonsole (46) zur beweglichen Lagerung eines Seitenstabilisators (48), welcher in Betriebseinbaulage eine mechanische Kopplung der Lagerkonsole (46) mit einem Heck-Kraftheber (12) des Nutzfahrzeugs (10) bewirkt, wobei die Lagerkonsole (46)
- sich zumindest teilweise entlang einer Fahrzeug-Längsrichtung (38) erstreckt,
- mit dem Achsgehäuse (32) in einem gegenseitigen Befestigungsbereich (56) fest verbunden ist, und
- von dem Befestigungsbereich (56) in Fahrzeug-Längsrichtung (38) beabstandet mit Verbindungsmitteln (60, 62) verbunden ist, **dadurch gekennzeichnet, dass** die Verbindungsmittel (60, 62)
- Hoch-Verbindungsmittel (60) aufweisen, welche sich zumindest teilweise entlang einer Fahrzeug-Hochrichtung (40) erstrecken zur Verbindung der Lagerkonsole (46) mit einer Verbindungsstelle (72) des Achsgehäuses (32), und/oder
- Quer-Verbindungsmittel (62) aufweisen, welche sich zumindest teilweise entlang einer Fahrzeug-Querrichtung (42) erstrecken zur Verbindung der Lagerkonsole (46) mit einem Verbindungslager (78), welches mit einer Tragstruktur (24) des Nutzfahrzeugs (10) fest verbunden ist.

2. Nutzfahrzeug nach Anspruch 1, **dadurch gekennzeichnet, dass**
- die Hoch-Verbindungsmittel (60) zumindest teilweise parallel zu einer durch die Fahrzeug-Längsrichtung (38) und die Fahrzeug-Hochrichtung (40) aufgespannten Ebene verlaufen, und/oder
- die Quer-Verbindungsmittel (62) zumindest teilweise parallel zu einer durch die Fahrzeug-Querrichtung (42) und die Fahrzeug-Hochrichtung (40) aufgespannten Ebene verlaufen.

3. Nutzfahrzeug nach einem der vorhergehenden Ansprüche,
**dadurch gekennzeichnet, dass** die Hoch-Verbindungsmittel (60) entlang der Fahrzeug-Längsrichtung (38) zumindest teilweise zwischen dem Befestigungsbereich (56) und den Quer-Verbindungsmitteln (62) angeordnet sind.

4. Nutzfahrzeug nach einem der vorhergehenden Ansprüche,
**dadurch gekennzeichnet, dass** die Hoch-Verbindungsmittel (60) und die Quer-Verbindungsmittel (62) entlang der Fahrzeug-Längsrichtung (38) an demselben Konsolenabschnitt (68) der Lagerkonsole (46) mit der Lagerkonsole (46) verbunden sind.

5. Nutzfahrzeug nach einem der vorhergehenden Ansprüche,
**dadurch gekennzeichnet, dass** mindestens eine der folgenden Verbindungen kraftschlüssig und/oder formschlüssig ausgebildet ist:
- die Verbindung zwischen der Lagerkonsole (46) und dem Achsgehäuse (32) an dem Befestigungsbereich (56),
- die Verbindung zwischen der Lagerkonsole (46) und dem Achsgehäuse (32) an dessen Verbindungsstelle (72),
- die Verbindung zwischen der Lagerkonsole (46) und dem Verbindungslager (78).

6. Nutzfahrzeug nach Anspruch 5, **dadurch gekennzeichnet, dass** die Verbindung ein Spannelement (76, 86, 88) aufweist zur Ausbildung einer kraftschlüssigen Verbindung.

7. Nutzfahrzeug nach Anspruch 6, **dadurch gekennzeichnet, dass** das Spannelement (76, 88) von einer Verbindungshülse (74, 90) umgeben ist, welche in eine Hülsenaufnahme (80, 92) des Achsgehäuses (32) oder des Verbindungslagers (78) formschlüssig eingreift.

8. Nutzfahrzeug nach einem der vorhergehenden Ansprüche, **dadurch gekennzeichnet, dass** mindestens eine der folgenden Verbindungen lösbar ausgebildet ist:
- die Verbindung zwischen der Lagerkonsole (46) und dem Achsgehäuse (32) an dem Befestigungsbereich (56),
- die Verbindung zwischen der Lagerkonsole (46) und dem Achsgehäuse (32) an dessen Verbindungsstelle (72),
- die Verbindung zwischen der Lagerkonsole (46) und dem Verbindungslager (78),
- eine Verbindung zwischen den Hoch-Verbindungsmitteln (60) und der Lagerkonsole (46),
- eine Verbindung zwischen den Quer-Verbindungsmitteln (62) und der Lagerkonsole (46),
- eine Verbindung zwischen den Hoch-Verbindungsmitteln (60) und den Quer-Verbindungsmitteln (62).

9. Nutzfahrzeug nach einem der vorhergehenden Ansprüche, **dadurch gekennzeichnet, dass** das Verbindungslager (78) Bestandteil eines Differentialgehäuses (28) ist, welches mit der Tragstruktur (24) des Nutzfahrzeugs (10) fest verbunden ist.

10. Nutzfahrzeug nach einem der vorhergehenden Ansprüche, **dadurch gekennzeichnet, dass** das Achsgehäuse (32) einen zumindest abschnittsweise kegelstumpfartig ausgebildeten Gehäusemantel aufweist, dessen Kegelstumpfachse (36) einer Mittellängsachse der Hinterachse (34) des Nutzfahrzeugs (10) entspricht.

## Claims

1. Agricultural commercial vehicle (10) with an axle housing (32) for a rear axle (34) and with a bearing bracket (46) for movable mounting of a side stabilizer (48) which, in an operational installation position, brings about a mechanical coupling of the bearing bracket (46) to a rear power lift (12) of the commercial vehicle (10), wherein the bearing bracket (46)
- at least partially extends along a vehicle longitudinal direction (38),
- is fixedly connected to the axle housing (32) in a mutual fastening region (56), and
- is connected, spaced apart from the fastening region (56) in the vehicle longitudinal direction (38), to connecting means (60, 62), **characterized in that** the connecting means (60, 62)
- comprise vertical connecting means (60), which at least partially extend along a vehicle vertical direction (40) for connecting the bearing bracket (46) to a connecting point (72) of the axle housing (32), and/or
- comprise transverse connecting means (62), which at least partially extends along a vehicle transverse direction (42) for connecting the bearing bracket (46) to a connecting bearing (78) which is fixedly connected to a supporting structure (24) of the commercial vehicle (10).

2. Commercial vehicle according to Claim 1, **characterized in that**
- the vertical connecting means (60) at least partially run parallel to a plane spanned by the vehicle longitudinal direction (38) and the vehicle vertical direction (40), and/or
- the transverse connecting means (62) at least partially run parallel to a plane spanned by the vehicle transverse direction (42) and the vehicle vertical direction (40).

3. Commercial vehicle according to either of the preceding claims, **characterized in that** the vertical connecting means (60) are at least partially arranged along the vehicle longitudinal direction (38) between the fastening region (56) and the transverse connecting means (62).

4. Commercial vehicle according to one of the preceding claims, **characterized in that** the vertical connecting means (60) and the transverse connecting means (62) are connected along the vehicle longitudinal direction (38) to the bearing bracket (46) at the same bracket portion (68) of the bearing bracket (46).

5. Commercial vehicle according to one of the preceding claims, **characterized in that** at least one of the following connections is formed with a force fit and/or form fit:
- the connection between the bearing bracket (46) and the axle housing (32) at the fastening region (56),
- the connection between the bearing bracket (46) and the axle housing (32) at the connecting point (72) thereof,
- the connection between the bearing bracket (46) and the connecting bearing (78).

6. Commercial vehicle according to Claim 5, **characterized in that** the connection comprises a clamping element (76, 86, 88) for forming a forcefitting connection.

7. Commercial vehicle according to Claim 6, **characterized in that** the clamping element (76, 88) is surrounded by a connecting sleeve (74, 90) which engages with a form fit in a sleeve receptacle (80, 92) of the axle housing (32) or of the connecting bearing (78).

8. Commercial vehicle according to one of the preceding claims, **characterized in that** at least one of the following connections is formed releasably:
- the connection between the bearing bracket (46) and the axle housing (32) at the fastening region (56),
- the connection between the bearing bracket (46) and the axle housing (32) at the connecting point (72) thereof,
- the connection between the bearing bracket (46) and the connecting bearing (78),
- a connection between the vertical connecting means (60) and the bearing bracket (46),
- a connection between the transverse connecting means (62) and the bearing bracket (46),
- a connection between the vertical connecting means (60) and the transverse connecting means (62).

9. Commercial vehicle according to one of the preceding claims, **characterized in that** the connecting bearing (78) is part of a differential housing (28) which is fixedly connected to the supporting structure (24) of the commercial vehicle (10).

10. Commercial vehicle according to one of the preceding claims, **characterized in that** the axle housing (32) has an at least sectionally frustoconical housing lateral surface, the truncated-cone axis (36) of which corresponds to a central longitudinal axis of the rear axle (34) of the commercial vehicle (10).

## Revendications

1. Véhicule utilitaire agricole (10), comprenant un carter d'essieu (32) pour un essieu arrière (34) et une console de palier (46) pour le montage mobile d'un stabilisateur latéral (48) qui provoque dans une position de montage de service un couplage mécanique entre la console de palier (46) et un relevage arrière (12) du véhicule utilitaire (10), dans lequel la console de palier (46)
- s'étend au moins en partie le long d'une direction longitudinale du véhicule (38),
- est raccordée solidement au carter d'essieu (32) dans une zone de fixation mutuelle (56), et
- est raccordée par des moyens de raccordement (60, 62) à distance de la zone de fixation (56) dans la direction longitudinale du véhicule (38), **caractérisé en ce que** les moyens de raccordement (60, 62)
- présentent des moyens de raccordement verticaux (60) qui s'étendent au moins en partie le long d'une direction verticale du véhicule (40) pour raccorder la console de palier (46) à un point de raccordement (72) du carter d'essieu (32), et/ou
- présentent des moyens de raccordement horizontaux (62) qui s'étendent au moins en partie le long d'une direction horizontale du véhicule (42) pour raccorder la console de palier (46) à un palier de raccordement (78) qui est raccordé solidement à une structure porteuse (24) du véhicule utilitaire (10).

2. Véhicule utilitaire selon la revendication 1, **caractérisé en ce que**
- les moyens de raccordement verticaux (60) s'étendent au moins en partie en parallèle à un plan défini par la direction longitudinale du véhicule (38) et la direction verticale du véhicule (40), et/ou
- les moyens de raccordement horizontaux (62) s'étendent au moins en partie en parallèle à un plan défini par la direction horizontale du véhicule (42) et la direction verticale du véhicule (40).

3. Véhicule utilitaire selon l'une quelconque des revendications précédentes, **caractérisé en ce que** les moyens de raccordement verticaux (60) sont disposés le long de la direction longitudinale du véhicule (38) au moins en partie entre la zone de fixation (56) et les moyens de raccordement horizontaux (62).

4. Véhicule utilitaire selon l'une quelconque des revendications précédentes, **caractérisé en ce que** les moyens de raccordement verticaux (60) et les moyens de raccordement horizontaux (62) sont raccordés à la console de palier (46) le long de la direction longitudinale du véhicule (38) au niveau de la même partie de console (68) de la console de palier (46).

5. Véhicule utilitaire selon l'une quelconque des revendications précédentes, **caractérisé en ce qu'**au moins l'un des raccordements suivants est réalisé par adhérence et/ou par complémentarité de forme :
- le raccordement entre la console de palier (46) et le carter d'essieu (32) au niveau de la zone de fixation (56),
- le raccordement entre la console de palier (46) et le carter d'essieu (32) au niveau du point de raccordement (72) de celui-ci,
- le raccordement entre la console de palier (46) et le palier de raccordement (78).

6. Véhicule utilitaire selon la revendication 5, **caractérisé en ce que** le raccordement présente un élément de serrage (76, 86, 88) pour réaliser un raccordement par adhérence.

7. Véhicule utilitaire selon la revendication 6, **caractérisé en ce que** l'élément de serrage (76, 88) est entouré d'une douille de raccordement (74, 90) qui vient en prise par complémentarité de forme avec un logement de douille (80, 92) du carter d'essieu (32) ou du palier de raccordement (78).

8. Véhicule utilitaire selon l'une quelconque des revendications précédentes, **caractérisé en ce qu'**au moins l'un des raccordements suivants est réalisé de manière amovible :
- le raccordement entre la console de palier (46) et le carter d'essieu (32) au niveau de la zone de fixation (56),
- le raccordement entre la console de palier (46) et le carter d'essieu (32) au niveau du point de raccordement (72) de celui-ci,
- le raccordement entre la console de palier (46) et le palier de raccordement (78),
- un raccordement entre les moyens de raccordement verticaux (60) et la console de palier (46),
- un raccordement entre les moyens de raccordement horizontaux (62) et la console de palier (46),
- un raccordement entre les moyens de raccordement verticaux (60) et les moyens de raccordement horizontaux (62).

9. Véhicule utilitaire selon l'une quelconque des revendications précédentes, **caractérisé en ce que** le palier de raccordement (78) fait partie d'un carter de différentiel (28) qui est raccordé solidement à la structure porteuse (24) du véhicule utilitaire (10).

10. Véhicule utilitaire selon l'une quelconque des revendications précédentes, **caractérisé en ce que** le carter d'essieu (32) présente une enveloppe de carter réalisée au moins par endroits de manière tronconique, dont l'axe de cône tronqué (36) correspond à un axe longitudinal médian de l'essieu arrière (34) du véhicule utilitaire (10).
